# EUROPEAN PATENT SPECIFICATION

(11) **EP 4 459 500 B1**
(45) Date of publication and mention of the grant of the patent: **19.11.2025**
(21) Application number: 24173945.7
(22) Date of filing: 02.05.2024
(51) Int. Cl.: G06K 13/08, G06K 13/14, B65H 1/04, B65H 31/02

(54) **TILTING DOOR SYSTEM WITH A DAMPING SYSTEM**
KIPPTÜRSYSTEM MIT EINEM DÄMPFUNGSSYSTEM
SYSTÈME DE PORTE BASCULANTE AVEC UN SYSTÈME D'AMORTISSEMENT

(30) Priority: 05.05.2023 FR 2304507
(43) Date of publication of application: 06.11.2024
(73) Proprietor: Evolis SAS, 49070 Beaucouzé (FR)
(72) Inventor: FRERE, Maxence, 49410 La Chapelle Saint Florent (FR); POIRIER, Jordan, 49630 Corne (FR)
(74) Representative: DTS Patent- und Rechtsanwälte PartmbB

(56) References cited:
- EP-A2- 1 017 013
- US-A1- 2019 135 569
- EVOLIS: "Evolis Zenius Brochure", 31 December 2015 (2015-12-31), XP002810451, Retrieved from the Internet <URL:https://www.idcardgroup.com/media/files/Evolis%20Zenius%20Brochure.pdf> [retrieved on 20231109]
- ID CARD GROUP: "Evolis Zenius - Quick Start Guide", 29 December 2017 (2017-12-29), XP093103227, Retrieved from the Internet <URL:https://www.youtube.com/watch?v=iYvUvscR7aM&t=82s> [retrieved on 20231120]

## Description

### TECHNICAL FIELD

The present invention relates to a door system for a processing machine, comprising a tilting door and a system for damping the door in the open position, as well as a processing machine including such a door system.

### PRIOR ART

There are processing machines that are intended to process plastic cards, like bank cards. For example, such a processing machine includes a printer, which prints a pattern on the card, or an encoding machine, which encodes a chip on the card. For this purpose, the processing machine is equipped with a processing module which acts on the card. To process such cards on a large scale, it is known to use a card feeder upstream of the processing module.

In general, such a card feeder includes a reservoir where the cards are stacked on top of one another and a separation system which takes the cards one after another by separating them. The reservoir is closed by a door which can be moved from an open position in which it enables free access to the reservoir and a closed position in which it prevents access to the reservoir.

For example, there are tilting doors which have a horizontal axis of rotation and which open by rotation between the closed position corresponding to a vertical position and the open position corresponding to a horizontal position.
The Evolis Zenius card printer, for example, comprises such a titling door:
https://www.idcardgroup.com/media/files/Evolis%20Zenius%20Brochure.pdf
https://www.youtube.com/watch?v=iYvUvscR7aM&t=82s

Upon tilting from the closed position to the open position, the door falls under the effect of gravity and it lies against a fixed stop which blocks it in the open position. When arriving at this stop, the door bounces several times before stabilizing. Further relevant prior art is described in EP 1017013 A2 and US 2019 135569 A1.

An object of the present invention is to provide a door system for a card processing machine, comprising a door system equipped with a damping system which prevents the door from bouncing upon opening thereof.

To this end, a door system for a processing machine including a frame is proposed, said door system including:
- a secondary frame having at least one stop,
- a door having a leaf and a shaft secured to the leaf, where the shaft is mounted movable in rotation about a tilting axis on the secondary frame between a closed position where the leaf extends vertically and an open position where the leaf extends horizontally and where, in the closed position, the shaft is in the lower portion of the leaf, where the shaft has on its periphery and for at least one stop, a projection or protrusion, where, in the closed position, the protrusion is not pressed against said stop and where, in the open position, the protrusion is pressed against said stop.

Advantageously, the shaft includes an inclined plane which connects the circular periphery of the shaft and the top of the protrusion.

Advantageously, there is a protrusion at each end of the shaft and one stop for each protrusion.

Advantageously, the door system includes, secured to the secondary frame, two first pairs of two jaws aligned vertically and open towards a first direction, and two second pairs of two jaws aligned vertically and open towards a second direction opposite to the first direction to delimit, between the pairs, a channel in which the shaft is inserted, and the/each stop consists of a jaw. Advantageously, in the closed position, the protrusion is positioned at an opening between two jaws.

The invention also proposes a card processing machine including a door system according to one of the preceding variants.

### BRIEF DESCRIPTION OF THE DRAWINGS

The above-mentioned features of the invention, as well as others, will appear more clearly upon reading the following description of an example embodiment, said description being made with reference to the appended drawings, wherein:
Fig. 1 is a perspective view of a processing machine with a door system according to the invention where the door is in the closed position;
Fig. 2 is a perspective view of the processing machine of Fig. 1 with the door in the open position;
Fig. 3 is a perspective view of a detail of implementation of the door system according to the invention;
Fig. 4 is a sectional view according to the plane IV of Fig. 3 with the door in the closed position; and
Fig. 5 is a view similar to that of Fig. 4 in the open position.

### DETAILED DISCLOSURE OF EMBODIMENTS

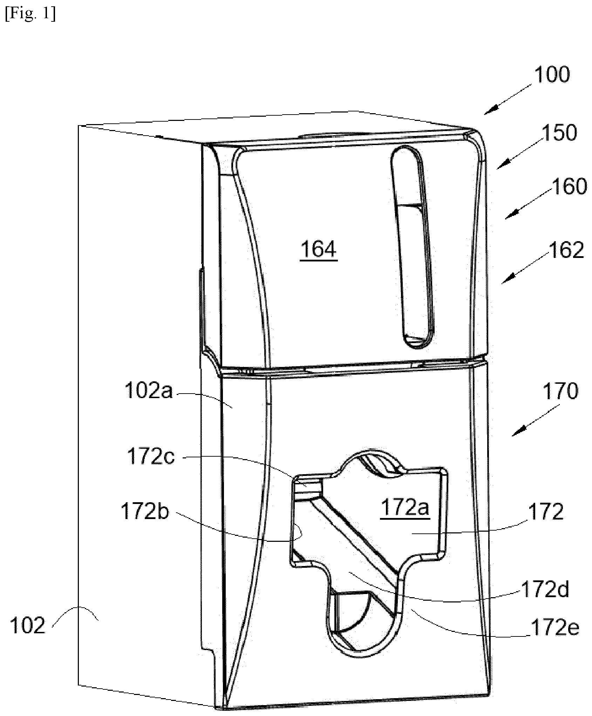

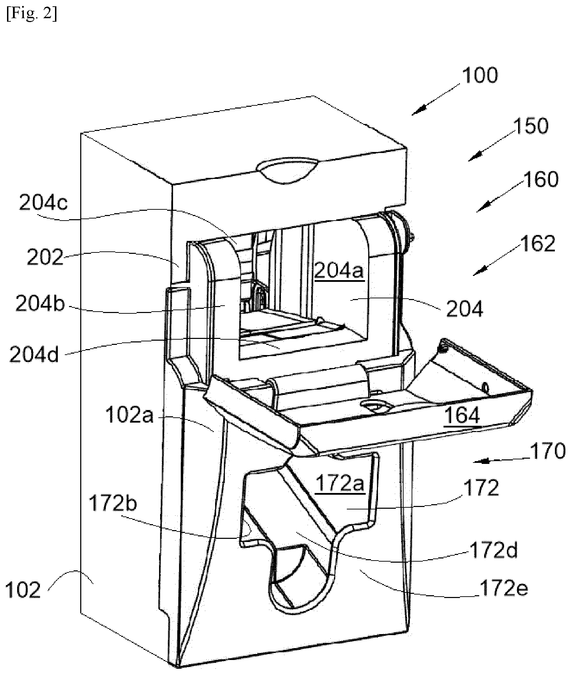

In the following description, the terms relating to a position are considered with reference to a processing machine 100 in the use position, i.e., as it is illustrated in Fig. 1 and Fig. 2.

The processing machine 100 includes a frame 102, a card feeder 150 and a card receptacle 170.

Conventionally, the processing machine 100 also includes a processing module and a transport system which includes means for moving the cards from the card feeder 150 to the processing module, then to the card receptacle 170, where the means conventionally include rolls which pinch the cards and motors which drive the rolls in rotation. Thus, the processing module is downstream of the card feeder 150 with respect to the direction of movement of the cards by the transport system and upstream of the card receptacle 170. In the embodiment of the invention depicted in Figs. 1 and 2, the card receptacle 170 is arranged below the card feeder 150, but it may be arranged in another location.

In the embodiment of the invention depicted in Fig. 2, the card feeder 150 is secured to the frame 102 and it includes a reservoir 204 in which the cards to be processed are stored. The reservoir 204 is herein delimited by three vertical walls 204a-c, namely a back wall 204c and two lateral walls 204a-b arranged on either side of the back wall 204c. These vertical walls 204a-c are secured to the frame 102 and form, when seen from above, a U, where the lateral walls 204a-b form the branches of the U and where the back wall 204c forms the bottom of the U.

In the lower portion, the reservoir 204 has a plate 204d secured to the frame 102 and generally horizontal which forms the base of the reservoir 204 and above which the cards to be processed, such as plastic cards, are stored. Thus, the cards are stacked on top of one another and on the plate 204d. Thus, the cards are arranged between the vertical walls 204a-c and on the plate 204d.

The card feeder 150 herein has a door system 160 according to the invention.

In the embodiment of the invention depicted in Figs. 1 and 2, the card receptacle 170 is secured to the frame 102 and it includes a housing 172 in which the processed cards are stored. Like for the reservoir 204, the housing 172 is herein delimited by three vertical walls 172a-c, namely a back wall 172c and two lateral walls 172a-b arranged on either side of the back wall 172c. These vertical walls 172a-c are secured to the frame 102 and form, when seen from above, a U, where the lateral walls 172a-b form the branches of the U and where the back wall 172c forms the bottom of the U.

In the lower portion, the housing 172 has a plate 172d secured to the frame 102 and generally horizontal which forms the base of the housing 172 and above which the processed cards are stored. Thus, the cards are stacked on top of one another and on the plate 172d. Thus, the cards are arranged between the vertical walls 172a-c and on the plate 172d.

In this case, the card receptacle 170 has a front wall 172e which is also vertical and which closes, at least partly, the housing 172 so as to stop the cards which fall into the housing 172.

The processing module is, for example, a printer or an encoding module, etc. The processing module and the transport system will not be described in more detail because they can take on any form known to a person skilled in the art. Similarly, the card feeder 150 and the card receptacle 170 may take on other forms.

Although the door system 160 is more particularly described as associated with the card feeder 150, a similar door system can be implemented for the card receptacle 170.

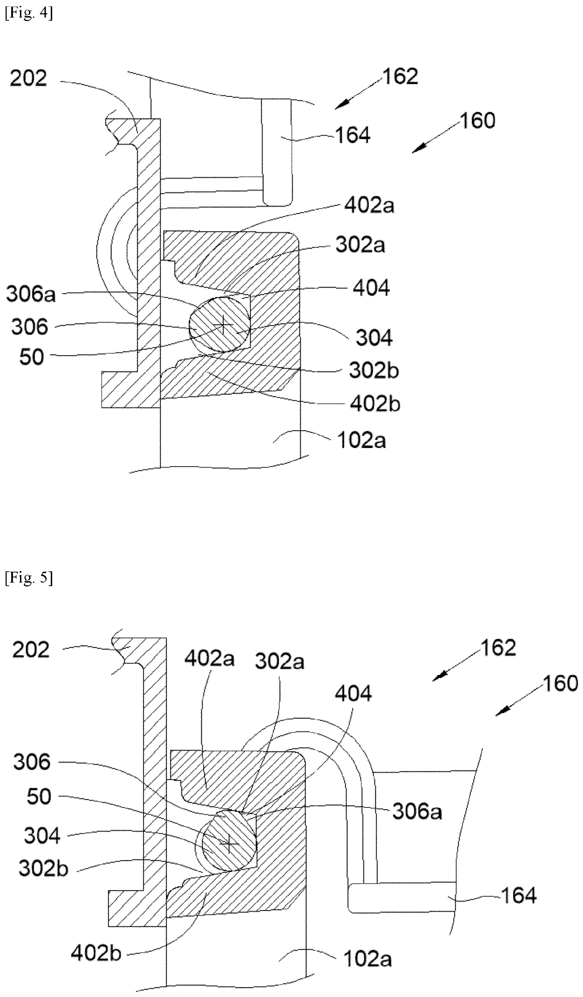

The door system 160 includes a door 162 having a leaf 164 movable alternately between a closed position (Figs. 1 and 4) and an open position (Figs. 2, 3, and 5). In the closed position, the leaf 164 forms a front wall of the reservoir 204 and closes it to hold the cards to be processed.

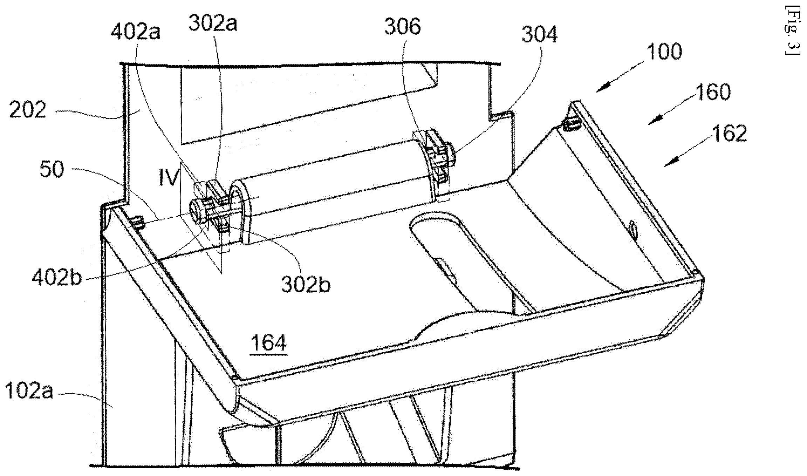

Fig. 3 shows the leaf 164 in the open position, and Figs. 4 and 5 show sections at the hinge of the leaf 164 respectively in the closed position and in the open position.

The door system 160 includes a secondary frame 202 which includes at least one stop 302a-b, 402a-b. The secondary frame 202 is secured to the frame 102 of the processing machine 100, and it may be a portion of the frame 102 of the processing machine 100 or an attached and fastened element.

The door 162 also includes a shaft 304 secured to the leaf 164, herein via a swan neck. The shaft 304 is mounted movable in rotation about a tilting axis 50 on the secondary frame 202 to enable the rotation of the shaft 304, and therefore of the leaf 164, about the tilting axis 50 between the closed position where the leaf 164 extends vertically and the open position where the leaf 164 extends horizontally.

In the closed position, the shaft 304 is in the lower portion of the leaf 164 to enable opening of the leaf 164 by gravity.

The shaft 304 has on its periphery, and for at least one stop 302a-b, 402a-b (herein the stop or stops 402a-b), a projection or protrusion 306 which therefore projects from the shaft 304.

As shown in Fig. 4, the protrusion 306 is positioned so that in the closed position, there is therefore no contact between the protrusion 306 and the stop 402a-b, and the protrusion 306 is therefore not pressed against the stop 402a-b and no blocking force is exerted by the stop 402a-b on the protrusion 306.

As shown in Fig. 5, after tilting the door 162, the protrusion 306 is positioned so that, in the open position, there is contact between the protrusion 306 and the stop 402a-b and the protrusion 306 is therefore pressed against the stop 402a-b, and blocking forces are exerted by the stop 402a-b on the protrusion 306 to block it in rotation.

Thus, with such an arrangement, when the door 162 tilts towards the open position, the protrusion 306 rubs against the stop 402a-b which blocks movement thereof and any possible bouncing.

In the embodiment of the invention presented herein, the protrusion 306 cooperates with the stop 402a which is above the shaft 304, but with a different arrangement, the protrusion 306 will cooperate with a stop 402b which is below the shaft 304.

Conventionally, the closed position of the door 162 may be guaranteed by a blocking means, such as a clip secured to the leaf 164 and including a flexible tooth which is inserted into a recess of the secondary frame 202 provided for this purpose.

On the side of the stop 402a, the shaft 304 herein includes an inclined plane 306a which connects the circular periphery of the shaft 304 and the top of the protrusion 306 so as to form a corner which is inserted between the shaft 304 and the stop 402a.

In the embodiment of the invention depicted in Fig. 3, there is a protrusion 306 at each end of the shaft 304 to ensure symmetrical blocking and there is thus one stop 402a for each protrusion 306.

Various arrangements are possible to carry out the rotation of the shaft 304 on the secondary frame 202, such as, for example, a hinge where the protrusion is then arranged on a movable node of the hinge.

In the embodiment of the invention depicted in Figs. 3, 4, and 5, the door system 160 includes four pairs of two jaws 302a-b, 402a-b. In the embodiment of the invention, there are two first pairs of two jaws 302a-b, where each first pair is open towards a first direction herein corresponding to the outside of the processing machine 100, and two second pairs of two jaws 402a-b (shown in ghost lines in Fig. 3) where each second pair is open towards a second direction opposite to the first direction, i.e., in this case the inside of the processing machine 100.

The first pairs are secured to a first element of the processing machine 100, herein to the secondary frame 202, and the second pairs are secured to a second element of the processing machine 100, herein to a cover 102a which is fastened to the secondary frame 202 and which herein forms the front wall 172e of the card receptacle 170.

The jaws 302a-b, 402a-b are aligned along the tilting axis 50 which forms the hinge axis of the leaf 164.

The two jaws 302a-b of a first pair are herein arranged next to the two jaws 402a-b of a second pair.

The opposite orientation between the jaws 302a-b of the first pairs and the jaws 402a-b of the second pairs allows delimiting a channel 404 therebetween which extends along the tilting axis 50 and in which the shaft 304 is inserted to rotate about the tilting axis 50. The dual arrangement of two pairs of jaws 302a-b, 402a-b facing one another allows holding the shaft 304 in the channel 404. For each pair of two jaws 302a-b, 402a-b, there is a jaw 302a, 402a above the shaft 304 and a jaw 302b, 402b below the shaft 304 and aligned vertically with said jaw 302a, 402a.

The stop herein comprises one/each jaw 402a of a second pair, but it may comprise one/each jaw 302a of a first pair.

As shown in Fig. 4, in the closed position, the protrusion 306 is herein positioned at the opening between two jaws 402a-b. Hence, there is no contact between the protrusion 306 and a jaw 402a-b.

As shown in Fig. 5, in the open position, the protrusion 306 is positioned against a jaw 402a. Hence, there is contact between the protrusion 306 and the jaw 402a.

The door 162 is mounted movable in rotation on the secondary frame 202, between an open position, enabling access to the inside of the reservoir 204 and the deposition of cards on the plate 204d, and a closed position, preventing access to the reservoir 204 while enclosing the cards in the reservoir 204, and vice versa. Thus, the door 164 closes the U formed by the vertical walls 204a-c.

The door 162 is movable in rotation about a tilting axis 50 which is directed horizontally. Thus, the door 162 can tilt about the tilting axis 50 between the open position and the closed position, and vice versa. In the open position, the door 162 is directed generally vertically and, in the open position, the door 162 is directed generally horizontally.

The tilting axis 50 is in the lower portion of the door 162 when it is in the closed position. Thus, when the door 162 is maneuvered to the open position, it tilts under the effect of gravity.

## Claims

1. A door system (160) for a card processing machine (100) including a frame (102), the door system (160) comprising:
- a secondary frame (202) having a first stop (302a-b, 402a-b); and
- a door (162) having a leaf (164) and a shaft (304) secured to the leaf (164), wherein the shaft (304) is mounted movable in rotation about a tilting axis (50) on the secondary frame (202) between a closed position wherein the leaf (164) extends vertically and an open position wherein the leaf (164) extends horizontally, and wherein, in the closed position, the shaft (304) is in the lower portion of the leaf (164);
**characterized in that**
the shaft (304) has, on its periphery, a first protrusion (306), wherein, in the closed position, the first protrusion (306) is not pressed against the first stop (302a-b, 402a-b) and wherein, in the open position, the first protrusion (306) is pressed against the first stop (302a-b, 402a-b).

2. The door system (160) according to claim 1, wherein the shaft (304) includes an inclined plane (306a) which connects a circular periphery of the shaft (304) and a top of the first protrusion (306).

3. The door system (160) according to one of claims 1 or 2, wherein the first protrusion (306) is at an end of the shaft (304), and further comprising a second protrusion (306) at an opposite end of the shaft (304) and a second stop (302a-b, 402a-b), wherein, in the closed position, the second protrusion is not pressed against the second stop and wherein, in the open position, the second protrusion is pressed against the second stop.

4. The door system (160) according to one of claims 1 to 3, further comprising, secured to the secondary frame (202), two first pairs of two first jaws (302a-b), the first jaws of each respective first pair aligned vertically and open towards a first direction, and two second pairs of two second jaws (402a-b), the second jaws of each respective second pair aligned vertically and open towards a second direction opposite to the first direction, to delimit between the first and second pairs, a channel (404) in which the shaft (304) is inserted;
wherein the first stop comprises at least one of the first or second jaws (302a-b, 402a-b).

5. The door system (160) according to claim 4, wherein, in the closed position, the first protrusion (306) is positioned at an opening between at least one of: the first jaws of at least one of the first pairs of jaws, or the second jaws of at least one of the second pairs of jaws.

6. A card processing machine (100) comprising a door system (160) according to one of the preceding claims.

## Patentansprüche

1. Türsystem (160) für eine Kartenbearbeitungsmaschine (100), einen Rahmen (102) umfassend, wobei das Türsystem (160) aufweist:
- einen sekundären Rahmen (202) mit einem ersten Anschlag (302a-b, 402a-b); und
- eine Tür (162) mit einem Blatt (164) und einer Achse (304), die am Blatt (164) befestigt ist, wobei die Achse (304) an dem sekundären Rahmen (202) um eine Schwenkachse (50) zwischen einer geschlossenen Position, in der sich das Blatt (164) vertikal erstreckt, und einer offenen Position, in der sich das Blatt (164) horizontal erstreckt, drehbeweglich montiert ist, und wobei in der geschlossenen Position die Achse (304) sich im unteren Abschnitt des Blatts (164) befindet;
**dadurch gekennzeichnet, dass**
die Achse (304) an ihrem Umfang einen ersten Vorsprung (306) hat, wobei in der geschlossenen Position der erste Vorsprung (306) nicht gegen den ersten Anschlag (302a-b, 402a-b) gedrückt wird und in der offenen Position der erste Vorsprung (306) gegen den ersten Anschlag (302a-b, 402a-b) gedrückt wird.

2. Türsystem (160) nach Anspruch 1, wobei die Achse (304) eine geneigte Ebene (306a) umfasst, die einen Kreisumfang der Achse (304) und ein Oberteil des ersten Vorsprungs (306) verbindet.

3. Türsystem (160) nach einem der Ansprüche 1 oder 2, wobei sich der erste Vorsprung (306) an einem Ende der Achse (304) befindet, und darüber hinaus einen zweiten Vorsprung (306) an einem entgegengesetzten Ende der Achse (304) und einen zweiten Anschlag (302a-b, 402a-b) aufweisend, wobei in der geschlossenen Position der zweite Vorsprung nicht gegen den zweiten Anschlag gedrückt wird und in der offenen Position der zweite Vorsprung gegen den zweiten Anschlag gedrückt wird.

4. Türsystem (160) nach einem der Ansprüche 1 bis 3, darüber hinaus, am sekundären Rahmen (202) befestigt, zwei erste Paare von zwei ersten Backen (302a-b) aufweisend, wobei die ersten Backen von jedem jeweiligen ersten Paar vertikal ausgerichtet und zu einer ersten Richtung hin offen sind, und zwei zweite Paare von zwei zweiten Backen (402a-b) aufweisend, wobei die zweiten Backen von jedem jeweiligen zweiten Paar vertikal ausgerichtet und zu einer zweiten Richtung hin offen sind, die entgegengesetzt zur ersten Richtung ist, um zwischen dem ersten und zweiten Paar einen Kanal (404) zu begrenzen, in den die Achse (304) eingesetzt ist;
wobei der erste Anschlag die ersten und/oder zweiten Backen (302a-b, 402a-b) aufweist.

5. Türsystem (160) nach Anspruch 4, wobei in der geschlossenen Position der erste Vorsprung (306) an einer Öffnung zwischen den ersten Backen von mindestens einem der ersten Paare von Backen und/oder den zweiten Backen von mindestens einem der zweiten Paare von Backen positioniert ist.

6. Kartenbearbeitungsmaschine (100), aufweisend ein Türsystem (160) nach einem der vorhergehenden Ansprüche.

## Revendications

1. Système de porte (160) pour une machine de traitement de cartes (100) comportant un cadre (102), le système de porte (160) comprenant :
- un cadre secondaire (202) présentant une première butée (302a-b, 402a-b) ; et
- une porte (162) présentant un vantail (164) et un arbre (304) fixé au vantail (164), l'arbre (304) étant monté de manière mobile en rotation autour d'un axe de basculement (50) sur le cadre secondaire (202) entre une position fermée dans laquelle le vantail (164) s'étend verticalement et une position ouverte dans laquelle le vantail (164) s'étend horizontalement, et dans lequel, dans la position fermée, l'arbre (304) se trouve dans la portion inférieure du vantail (164) ;
**caractérisé en ce que**
l'arbre (304) présente, sur sa périphérie, une première saillie (306), dans lequel, dans la position fermée, la première saillie (306) n'est pas pressée contre la première butée (302a-b, 402a-b) et dans lequel, dans la position ouverte, la première saillie (306) est pressée contre la première butée (302a-b, 402a-b).

2. Système de porte (160) selon la revendication 1, dans lequel l'arbre (304) comporte un plan incliné (306a) qui relie une périphérie circulaire de l'arbre (304) et un sommet de la première saillie (306).

3. Système de porte (160) selon l'une des revendications 1 ou 2, dans lequel la première saillie (306) se trouve au niveau d'une extrémité de l'arbre (304), et comprenant en outre une seconde saillie (306) au niveau d'une extrémité opposée de l'arbre (304) et une seconde butée (302a-b, 402a-b), dans lequel, dans la position fermée, la seconde saillie n'est pas pressée contre la seconde butée et dans lequel, dans la position ouverte, la seconde saillie est pressée contre la seconde butée.

4. Système de porte (160) selon l'une des revendications 1 à 3, comprenant en outre, fixé au cadre secondaire (202), deux premières paires de deux premières mâchoires (302a-b), les premières mâchoires de chaque première paire respective étant alignées verticalement et ouvertes vers une première direction, et deux secondes paires de deux secondes mâchoires (402a-b), les secondes mâchoires de chaque seconde paire respective étant alignées verticalement et ouvertes vers une seconde direction opposée à la première direction, afin de délimiter, entre les premières et secondes paires, un canal (404) dans lequel l'arbre (304) est inséré ;
dans lequel la première butée comprend au moins une mâchoire parmi les premières ou les secondes mâchoires (302a-b, 402a-b).

5. Système de porte (160) selon la revendication 4, dans lequel, dans la position fermée, la première saillie (306) est positionnée au niveau d'une ouverture entre au moins une mâchoire parmi : les premières mâchoires d'au moins une des premières paires de mâchoires, ou les secondes mâchoires d'au moins une des secondes paires de mâchoires.

6. Machine de traitement de cartes (100) comprenant un système de porte (160) selon l'une des revendications précédentes.
